# EUROPEAN PATENT APPLICATION

(11) **EP 2 541 736 A2**
(43) Date of publication of application: **02.01.2013**
(21) Application number: 12275099.5
(22) Date of filing: 27.06.2012
(51) Int. Cl.: H02K 1/24, H02K 15/02

(54) **Switched reluctance motor**

(30) Priority: 28.06.2011 KR 20110063182
(71) Applicant: Samsung Electro-Mechanics Co., Ltd, Suwon Gyunggi-do 443-743 (KR)
(72) Inventor: Lee,, Joo Young, 443-743 Gyunggi-do (KR); Yun,, Tae Ho, 443-743 Gyunggi-do (KR); Yoon,, Hee Soo, 443-743 Gyunggi-do (KR); Bae,, Han Kyung, 443-743 Gyunggi-do (KR); Yang,, Tae Il, 443-743 Gyunggi-do (KR)
(74) Representative: Powell, Timothy John

(57) **Abstract**

Disclosed herein is a switched reluctance motor including: a rotor formed with a plurality of salient poles; a rotor core having the rotor coupled thereto; and a stopper formed integrally with the rotor core by an insert special molding method.

## Description

### CROSS REFERENCE TO RELATED APPLICATION

This application claims the benefit of Korean Patent Application No. 10-2011-0063182, filed on June 28, 2011, entitled "Switched Reluctance Motor", which is hereby incorporated by reference in its entirety into this application.

### BACKGROUND OF THE INVENTION

### 1. Technical Field

The present invention relates to a switched reluctance motor.

### 2. Description of the Related Art

A general switched reluctance motor (SRM) is a motor in which both of a stator and a rotor have a magnetic structure, which is a salient pole, the stator has a concentrated type coil wound therearound, and the rotor is configured only of an iron core without any type of excitation device (a winding, a permanent magnet, or the like), such that a competitive cost is excellent

A speed changeable switched reluctance motor stably generates a continuous torque with the aid of a converter using a power semiconductor and a sensor sensing a position of a rotor and is easily controlled to be appropriate for performance required in each application.

In a switched reluctance motor according to the prior art, a stopper has been formed through vertical molding at the time of development and manufacturing of a rotor core which is a rotor.

The manufacturing scheme of the rotor of the switched reluctance motor according to the prior art described above has many problems. For example, a cost is required to manufacture and develop molds for each component and a manufacturing cost increases due to a separate assembling process, such that manufacturing cost competitiveness is lowered.

### SUMMARY OF THE INVENTION

The present invention has been made in an effort to provide a switched reluctance motor capable of reducing a manufacturing cost of a rotor by changing a method of molding surrounding plastic in the case in which the rotor has a salient pole structure.

According to a preferred embodiment of the present invention, there is provided a switched reluctance motor including: a rotor formed with a plurality of salient poles; a rotor core having the rotor coupled thereto; and a stopper formed integrally with the rotor core by an insert special molding method.

The insert special molding method may be an injection molding method using a thermoplastic material or a thermosetting resin.

The insert special molding method may be a method using an injection press material.

The insert special molding method may be a method of performing press processing and then performing insert molding.

At the time of assembling the stopper to the rotor core, an air gap may be 0.3t.

The center of the stopper formed integrally with the rotor core by the insert special molding method may be provided with the shaft.

### BRIEF DESCRIPTION OF THE DRAWINGS

The above and other objects, features and advantages of the present invention will be more clearly understood from the following detailed description taken in conjunction with the accompanying drawings, in which:
FIG. 1 is an enlarged view of a rotor core of a switched reluctance motor according to a preferred embodiment of the present invention;
FIG. 2 is a view showing a shape in which a stator and a rotor of the switched reluctance motor according to the preferred embodiment of the present invention are assembled to each other;
FIG. 3 is an enlarged view of the rotor core of the switched reluctance motor according to the preferred embodiment of the present invention and a stopper formed integrally with each other by insert-molding; and
FIG. 4 is a view showing a shape in which a shaft is inserted into the center of a shape in which the rotor core of the switched reluctance motor according to the preferred embodiment of the present invention and the stopper are formed integrally with each other by the insert-molding.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

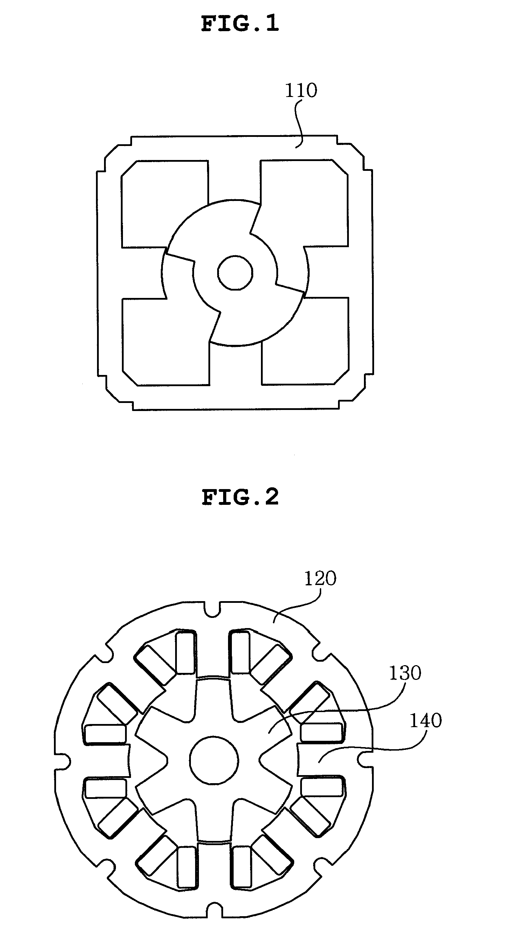

FIG. 1 is an enlarged view of a rotor core 110 of a switched reluctance motor 100 according to a preferred embodiment of the present invention; and FIG. 2 is a view showing a shape in which a stator 120 and a rotor 130 of the switched reluctance motor 100 according to the preferred embodiment of the present invention are assembled to each other.

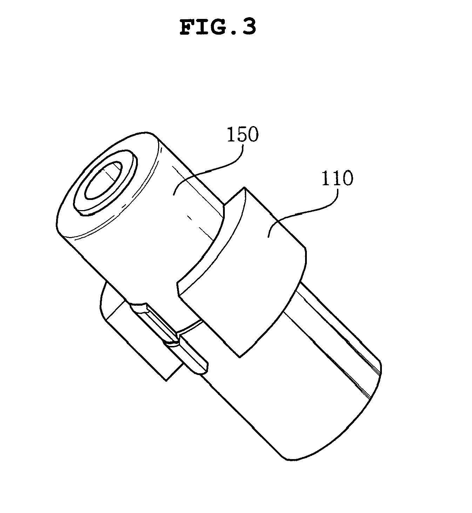

FIG. 3 is an enlarged view of the rotor core 110 of the switched reluctance motor 100 according to the preferred embodiment of the present invention and a stopper 150 formed integrally with each other by insert-molding.

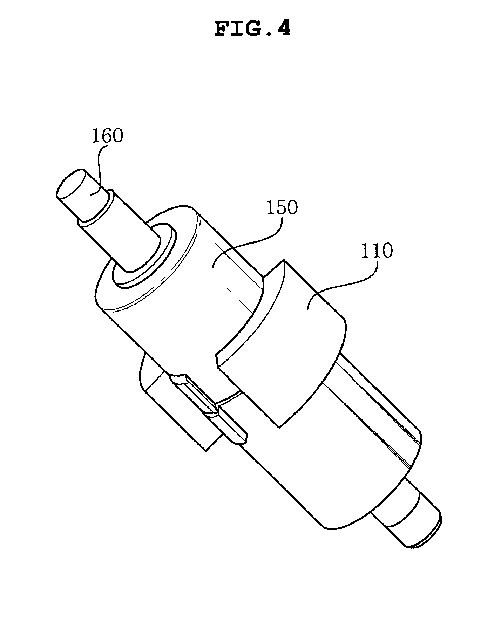

FIG. 4 is a view showing a shape in which a shaft 160 is inserted into the center of a shape in which the rotor core 110 of the switched reluctance motor 100 according to the preferred embodiment of the present invention and the stopper 150 are formed integrally with each other by the insert-molding.

FIG. 1 is an enlarged view of a rotor core 110 of a switched reluctance motor 100 according to a preferred embodiment of the present invention.

The rotor core 110 is generally formed by press processing and then coupled integrally with the stopper 150 by an insert special molding method.

FIG. 2 is a view showing a shape in which a stator 120 and a rotor 130 of the switched reluctance motor 100 according to the preferred embodiment of the present invention are assembled to each other.

The stator 120 includes a plurality of salient poles 140 to serve to fix a rotating part of the switched reluctance motor at an outer diameter thereof.

The stator 120 is formed with the plurality of salient poles 140 protruded from the outer diameter thereof to an inner diameter thereof The number of salient poles 140 is various. FIG. 2 shows the case in which the stator 120 has eight salient poles.

The inner diameter of the stator 120 is provided with the rotor 130.

The rotor 130 supports axial rotation of the motor and may be formed to have various shapes and poles according to a kind of motor. FIG. 2 shows the case in which the rotor 130 according to the preferred embodiment of the present invention has six phases.

An assembled assembly in which the rotor 130 is assembled to the inner diameter of the stator 120 is assembled to a central portion of the rotor core 110 of FIG. 1.

FIG. 3 shows the stopper 150 formed integrally with the rotor core 110 of the switched reluctance motor 100 according to the preferred embodiment of the present invention.

The stator 120 and the rotor 130 are assembled to the central portion of the rotor core 110 to form a rotor assembly.

The rotor core 110 and the stopper 150 are formed integrally with each other by the insert special molding method, which reduces the number of manufacturing processes and a manufacturing time as compared to a process according to the prior art in which the rotor core and the stopper are separately formed and then vertically assembled to each other.

Various methods of specially molding the rotor core 110 and the stopper 150 may be used. For example, an injection molding method using a thermoplastic material or a thermosetting resin may be used In addition, a method using an injection press material or a method of performing press processing and then performing insert molding may be used.

At the time of assembling the stopper 150 to the rotor core 110, a small air gap may be 0.3t or less. When the air gap is maintained to be 0.3t or less, abrasion due to looseness of an assembled surface contact part of the stopper at the time of high speed rotation of the rotor may be prevented.

As set forth above, with the switched reluctance motor according to the preferred embodiment of the present invention, the rotor core 110 and the stopper 150 are formed integrally with each other by the insert special molding method, such that an assembling time is reduced. As a result of an experiment, an assembling time of 9.4 seconds has been reduced per one set.

In addition, the rotor core 110 and the stopper 150 are formed integrally with each other by the insert special molding method, such that the number of processes is also reduced. As a result of an experiment, a separate re-compressing process for correcting a height, parallelism, and flatness after assembly of the rotor core has been removed.

It could be confirmed that a cost of 26.5 won is reduced per one set due to the removal of the process as a result of an experiment.

Further, a cost required to manufacture an unnecessary assembling jig has been reduced, and the number of manufacturing mold sets has been reduced from 3 to 2.

FIG. 4 is a view showing the shape in which the shaft 160 is inserted into the center of the shape in which the rotor core 110 of the switched reluctance motor 100 according to the preferred embodiment of the present invention and the stopper 150 are formed integrally with each other by the insert-molding.

With the switched reluctance motor 100 according to the preferred embodiment of the present invention having the above-mentioned configuration, the rotor core 110 and the stopper 150 are formed integrally with each other by the insert special molding method, thereby making it possible to reduce an assembling time, an assembling process, and an assembling cost.

The insert special molding method may be applied to all motors as well as the switched reluctance motor.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A switched reluctance motor comprising:
a rotor formed with a plurality of salient poles;
a rotor core having the rotor coupled thereto; and
a stopper formed integrally with the rotor core by an insert special molding method

2. The switched reluctance motor as set forth in claim 1, wherein the insert special molding method is an injection molding method using a thermoplastic material or a thermosetting resin.

3. The switched reluctance motor as set forth in claim 1, wherein the insert special molding method is a method using an injection press material.

4. The switched reluctance motor as set forth in claim 1, wherein the insert special molding method is a method of performing press processing and then performing insert molding.

5. The switched reluctance motor as set forth in claim 1, wherein at the time of assembling the stopper to the rotor core, an air gap is 0.3t.

6. The switched reluctance motor as set forth in claim 1, wherein the center of the stopper formed integrally with the rotor core by the insert special molding method is provided with the shaft.
